# EUROPÄISCHE PATENTSCHRIFT

(11) **EP 2 055 968 B1**
(45) Veröffentlichungstag und Bekanntmachung des Hinweises auf die Patenterteilung: **23.11.2011**
(21) Anmeldenummer: 08105578.2
(22) Anmeldetag: 15.10.2008
(51) Int. Cl.: F16B 25/00, F16B 33/06

(54) **Gewindefurchende Schraube**
Thread moulding screw
Vis autotaraudeuse

(30) Priorität: 31.10.2007 DE 102007000607
(43) Veröffentlichungstag der Anmeldung: 06.05.2009
(73) Patentinhaber: HILTI Aktiengesellschaft, 9494 Schaan (LI)
(72) Erfinder: Gstach, Peter, 9494 Schaan (LI); Aumüller, Berthold, 92655 Grafenwöhr (DE)
(74) Vertreter: Söllner, Oliver

(56) Entgegenhaltungen:
- EP-A1- 1 655 498
- WO-A1-2004/074697

## Beschreibung

Die Erfindung betrifft eine gewindefurchende Schraube mit einem Schaft, von dessen freien Ende ausgehend, sich über wenigstens einen Teils seiner Länge ein Gewinde erstreckt, das zumindest teilweise in radial nach aussen offenen Aussparungen Schneidkörper aus einem Werkstoff mit gegenüber der Härte des Gewindes grösserer Härte aufweist, wobei die radiale Aussenkontur der Schneidkörper das Gewinde zumindest teilweise überragt.

Derartige Schrauben werden direkt in ein zuvor in einem Untergrund erstellten Bohrloch eingeschraubt, wobei das Gewinde der Schraube ein Gegengewinde beziehungsweise einen Hinterschnitt in den Untergrund furcht beziehungsweise schneidet.

Für Aussenanwendungen werden die Schrauben, wie Betonschrauben, vorteilhaft aus einem korrosionsbeständigen Material, beispielsweise aus korrosionsbeständigen Stahlwerkstoffen hergestellt. Derartige Materialien weisen jedoch oftmals eine Härte auf, die für ein Furchen eines mineralischen Untergrundes nicht ausreicht, so dass das Gewinde der Schraube beim Einschrauben verschleisst. Eine Härtung der Schraube oder des einstückig mit dem Schaft ausgebildeten Gewindes ist bei korrosionsbeständigen Materialien nur bedingt möglich.

Aus der DE 198 52 338 A1 ist eine Schraube aus rostfreiem Stahl bekannt, dessen Schaft und Gewinde mit nach aussen offenen Aufnahmebohrungen zur Aufnahme von Schneidkörpern in Form von zylindrischen Schneideinsatz-Stiften aus gehärtetem Stahl vorgesehen ist, die das Einschneiden in einen harten, mineralischen Untergrund, wie beispielsweise Beton oder Mauerwerk erleichtern. Die Schneideinsatz-Stifte sind in Einschraubrichtung formschlüssig und in radialer Richtung reibschlüssig in den Aufnahmebohrungen im Schaft gehalten.

Nachteilig an der bekannten Lösung ist, dass alle Schneideinsatz-Stifte jeweils im gleichen Mass die Querschnitts-Projektionsfläche des Gewindes überragen. Da der erste dem Gewindeanfang benachbarte Schneideinsatz-Stift bereits das gesamte Hinterschnittvolumen für das Gewinde der Schraube erzeugt, wirken hohe Kräfte auf diesen Schneideinsatz-Stift, weshalb dieser zum Ausbrechen aus dem Gewinde neigt. Des Weiteren ist ein hohes Eindrehmoment erforderlich, um derartige gewindefurchenden Schrauben, insbesondere mit kleinerem Durchmesser, zu setzen.

Die EP 1 655 498 A1 betrifft eine gewindefurchende Schraube mit einem Schaft und einem umfänglich an diesem angeordneten Gewinde, wobei mehrere Schneidmittel in Aussparungen im Gewinde angeordnet sind, deren Härte grösser als die Härte des Gewindes ist, wobei die Schneidmittel als in den Aussparungen angeordnetes Schweissgut ausgebildet sind.

Aus der WO2004/074697A geht eine gewindeschneidende Schraube mit einem im Wesentlichen zylindrischen Kern aus Metall, einem einstückig mit dem Kern ausgebildeten Gewinde und mindestens einem im Gewinde angeordneten Schneidelement hervor. Das Schneidelement kann dabei im Querschnitt quer zur Längsachse des zylindrischen Kerns etwa wannenförmig ausgebildet sein.

Aufgabe der Erfindung ist es, eine gewindefurchende Schraube zu schaffen, die das Setzen der Schraube in harten Untergründen, wie z. B. Beton, verbessert und einfach zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung weist das Gewinde einen Abschnitt auf, in dem zum freien Ende des Schafts hin die Höhe des Gewindes stetig und die Höhe der radialen Aussenkontur der Schneidkörper stufenweise jeweils in Bezug auf die Schaftaussenseite abnehmen.

Die radiale Aussenkontur des ersten, dem Gewindeanfang zugewandten Schneidkörpers weist die geringste Höhe aller im Gewinde vorgesehenen Schneidkörper zur Schaftaussenseite auf. Die abgestufte Anordnung der radialen Aussenkontur der Schneidkörper ist ausgehend von einem Schneidkörper fallend im zum freien Ende des Schafts in der Höhe zur Schaftaussenseite stetig abnehmenden Abschnitt des Gewindes zum Gewindeanfang hin. Das gesamte erforderliche Hinterschnittvolumen für das Gewinde der gewindefurchenden Schraube wird nicht mehr bereits von dem in Bezug auf den Gewindeanfang ersten Schneidkörper erzeugt. Vielmehr wird das von dem ersten Schneidkörper erzeugte Gegengewinde beziehungsweise der erzeugte Hinterschnitt von den im Gewindeverlauf nachfolgenden Schneidkörpem sukzessiv bis auf das für das zumindest eine Gewinde der Schraube erforderliche Hinterschnittsvolumen vertieft. Dabei wirken jeweils geringe Kräfte auf die einzelnen Schneidkörper. Der erste Schneidkörper ist näher am Gewindeanfang positionierbar, als es bei einer herkömmlichen Schraube mit Schneidkörpem im Gewinde der Fall ist, da aufgrund der massgeblich geringeren, insbesondere auf den ersten Schneidkörper wirkenden Kräfte die in dem sich an den Gewindeanfang anschliessenden, ausgehend vom Gewindeanfang stetig in der Höhe zunehmenden Abschnitt beziehungsweise im Gewindeauslauf vorhandene Rückabstützfläche im Gewinde für eine ausreichende Abstützung und Verankerung des Schneidkörpers auch in diesem Abschnitt ausreicht. Es brechen und fallen weniger oder keine Schneidkörper zu Beginn des Einschraubvorgangs aus, so dass im Wesentlichen alle in dem Gewinde eingesetzten Schneidkörper für den gesamten Gewindefurchvorgang zur Verfügung stehen.

Zudem wird durch die gestufte Anordnung der Schneidkörper in dem zum freien Ende des Schafts hin stetig in der Höhe abnehmenden Abschnitt des Gewindes ein gleichmässigeres Furchen zu Beginn des Einschraubvorgangs gewährleistet. Da die Schneidarbeit auf mehrere hintereinander angeordnete Schneidkörper verteilt ist, treten geringere Druckspitzen an den die Querschnitts-Projektionsfläche zumindest bereichsweise überragenden Schneidkörper auf, was eine vorteilhafte Ausbildung des Hinterschnitts beziehungsweise des Gegengewindes im Untergrund gewährleistet. Solche Druckspitzen an Schneidkörpern, welche örtlich die Druckfestigkeit des mineralischen Untergrundes übersteigen, führen zu einer örtlich begrenzten Zerstörung des Untergrundes, was zu einem derart vergrösserten Abbau von Untergrundmaterial führt, dass das in den erzeugten Hinterschnitt eingreifende Gewinde in diesem Bereich keine oder nur begrenzte Last übertragen kann. Die erfindungsgemässe Schraube weist aufgrund der gegenüber einer bisher bekannten Schraube niedrigeren Eindrehmomente eine kürzere Setzzeit sowie eine höhere Setzwahrscheinlichkeit auch bei kleineren Bohrereckmassen auf.

Mineralische Untergründe wie Beton weisen Bewehrungseisen auf, die gegebenenfalls im Bereich des Bohrlochs liegen. Durch die gestufte Anordnung der harten Schneidkörper ist der Vorschub der Schraube auch bei einem Bewehrungseisentreffer gewährleistet.

Die Schneidkörper sind vorteilhaft aus einem Hartmetall gefertigt und sind weiter vorteilhaft in das Gewinde beispielsweise in einem Widerstandsschweissverfahren eingeschweisst.

Vorzugsweise nimmt die Höhe der radialen Aussenkontur zur Schaftaussenseite von Schneidkörper zu Schneidkörper gleichmässig ab, so dass jeder Schneidkörper im Wesentlichen das gleiche Hinterschnittvolumen in den Untergrund schneiden muss. Damit wird eine Gleichmässigkeit der auf die Schneidkörper einwirkenden Kräfte gewährleistet, da die Schneidarbeit im Wesentlichen auf alle Schneidkörper gleichmässig aufgeteilt wird.

Vorteilhaft weisen die Schneidkörper im Querschnitt eine polygonale Ausgestaltung auf und zumindest eine der polygonalen Kanten des Schneidkörpers ist die radiale Aussenkontur des Schneidkörpers. Derartig ausgebildete Schneidkörper weisen ein besonders vorteilhaftes Schneidverhalten in mineralischen Untergründen auf. Vorteilhaft weisen die Schneidkörper eine gewindenahe Ausgestaltung auf, wobei unter gewindenah ein Schneidkörper verstanden wird, der über die Querschnitts-Projektionsfläche des Gewindes zumindest bereichsweise vorsteht. Vorteilhaft weisen alle Schneidkörper die gleiche Querschnittsausgestaltung auf, was eine einfache Fertigung der erfindungsgemässen Schraube ermöglicht. In einer alternativen Ausführungsform werden an einer Schraube jeweils unterschiedliche Querschnitte aufweisende Schneidkörper vorgesehen, die entsprechend dem gewünschten Schneidverhalten im Gewinde angeordnet werden. Die Schneidkörper sind in ihrem Querschnitt beispielsweise rund oder polygonal.

Bevorzugt sind in dem zum freien Ende des Schafts hin in der Höhe stetig abnehmenden Abschnitt des Gewindes zwei bis zehn, vorteilhaft drei bis sechs, Schneidkörper vorgesehen, was ein vorteilhaftes Anschneid- und Einschneidverhalten gewährleistet.

Vorzugsweise sind die Schneidkörper in Axialprojektion des Schafts jeweils um 60° bis 120° versetzt zueinander angeordnet, was ein vorteilhaftes Anschneid- und Einschneidverhalten gewährleistet. Je nach Durchmesser der Schraube variiert der Winkel zwischen den Schneidkörpern.

Die Erfindung wird nachstehend anhand eines Ausführungsbeispiels näher erläutert. Es zeigen:
- Fig. 1: Eine Schraube in Seitenansicht;
- Fig. 2: einen schematischen Längsschnitt durch den Gewindeauslauf in vergrösserter Darstellung gem. der Linie II-II in Fig. 1; und
- Fig. 3: einen Schnitt durch einen Schneidkörper entlang der Linie III-III in Fig. 2.

Grundsätzlich sind in den Figuren gleiche Teile mit den gleichen Bezugszeichen versehen.

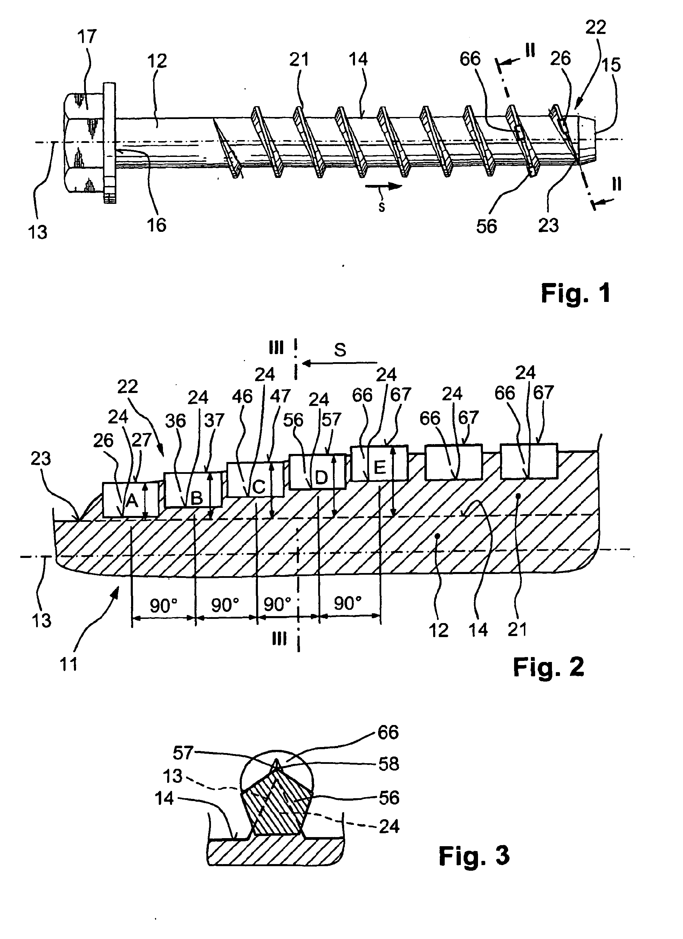

Die in den Figuren 1 und 2 dargestellte gewindefurchende Schraube 11 weist einen Schaft 12 auf, von dessen freien Ende 15 ausgehend, sich über wenigstens einen Teil seiner Länge ein einstückig mit dem Schaft 12 ausgebildetes Gewinde 21 erstreckt. Der Schaft 12 erstreckt sich entlang einer Längsachse 13 der Schraube 11 und weist eine radiale Schaftaussenseite 14 auf. An dem dem freien Ende 15 gegenüberliegenden Ende 16 ist ein Sechskant-Schraubenkopf als Drehangriffsmittel 17 vorgesehen. Der Pfeil S zeigt in den Figuren jeweils die Einschraubrichtung der Schraube 11 an.

Das Gewinde 21 weist in radial nach aussen offenen Aussparungen 24 Schneidkörper 26, 36, 46, 56, 66 aus einem Werkstoff mit gegenüber der Härte des Gewindes 21 grösserer Härte auf. Die radiale Aussenkontur 27; 37; 47; 57, 67 der Schneidkörper 26, 36, 46, 56, 66 überragt das Gewinde 21 zumindest teilweise. Die Höhe des Gewindes 21 zur Schaftaussenseite 14 nimmt zum freien Ende 15 des Schafts 12 hin stetig ab. Die Höhe A; B; C; D, E der radialen Aussenkontur 27; 37; 47; 57, 67 der Schneidkörper 26, 36, 46, 56, 66 zur Schaftaussenseite 14 nimmt stufenweise und gleichmässig ab.

Der Schneidkörper 56 weist im Querschnitt eine fünfeckige, polygonale Ausgestaltung auf, wobei die polygonale Kante 58 des Schneidkörpers 56 die radiale Aussenkontur 57 des Schneidkörpers 56 bildet. Die ausgehend vom Gewindeanfang 23 im Gewinde 21 nachfolgenden Schneidkörper 66 sind jeweils im Querschnitt kreisrund.

## Patentansprüche

1. Gewindefurchende Schraube (11) mit einem Schaft (12), von dessen freien Ende (15) ausgehend, sich über wenigstens einen Teil seiner Länge ein Gewinde (21) erstreckt, das zumindest teilweise in radial nach aussen offenen Aussparungen (24) Schneidkörper (26, 36, 46, 56, 66) aus einem Werkstoff mit gegenüber der Härte des Gewindes (21) grösserer Härte aufweist, wobei die radiale Aussenkontur (27; 37; 47; 57; 67) der Schneidkörper (26, 38, 46, 56, 66) das Gewinde (21) zumindest teilweise überragt, **dadurch** gekennzelchnet, dass
das Gewinde (21) einen Abschnitt aufweist, in dem zum freien Ende (15) des Schafts (12) hin die Höhe des Gewindes (21) zur Schaftaussenseite (14) stetig und die Höhe (A; B; C; D, E) der radialen Aussenkontur (27; 37; 47; 57, 67) der Schneidkörper (26, 36, 46, 56, 66) zur Schaftanssenseite stufenweise abnehmen.

2. Gewindefurchende Schraube nach Anspruch 1, **dadurch gekennzeichnet, dass** die Höhe (A; B; C; D, E) der radialen Aussenkontur (27; 37; 47; 57, 67) zur Schaftaussenseite (14) von Schneidkörper (26, 36, 46, 56, 66) zu Schneidkörper (26, 36, 46, 56) gleichmässig abnimmt.

3. Gewindefurchende Schraube nach Anspruch 1 oder 2, **dadurch gekennzeichnet, dass** in dem stetig zum freien Ende (15) des Schafts (12) hin in der Höhe abnehmenden Abschnitt des Gewindes (21) zwei bis zehn Schneidkörper (26; 36; 46; 56, 66) vorgesehen sind.

4. Gewindefurchende Schraube nach einem der Ansprüche 1 bis 3, **dadurch gekennzeichnet, dass** die Schneidkörper (26; 36; 46; 56, 66) in Axialprojektion des Schafts (12) jeweils um 60° bis 120° versetzt zueinander angeordnet sind.

## Claims

1. Thread-cutting screw (11), comprising a shaft (12) over a least a part of the length of which, starting from its free end (15), there extends a thread (21) which has cutting elements (26, 36, 46, 56, 66) located at least partially in recesses (24) which are open radially to the outside, which cutting elements (26, 36, 46, 56, 66) are made of a material with greater hardness as compared to the hardness of the thread (21 the radially outer contour (27; 37; 47; 57, 67) of the cutting elements (26, 36, 46, 56, 66) projecting at least partially beyond the thread (21),
**characterised in that**
the thread (21) includes a section in which the height of the thread (21) with respect to the outside (14) of the shaft decreases constantly towards the free end (15) of the shaft (12) and the height (A; B; C; D, E) of the radially outer contour (27; 37; 47; 57, 67) of the cutting elements (26, 36, 46, 56, 66) with respect to the outside (14) of the shaft decreases by degrees towards the free end (15) of the shaft (12).

2. Thread-cutting screw according to Claim 1, **characterised in that** the height (A; B; C; D, E) of the radially outer contour (27; 37; 47; 57, 67) with respect to the outside (14) of the shaft decreases uniformly from cutting element (26, 36, 46, 56, 66) to cutting element (26, 36, 46, 56) .

3. Thread-cutting screw according to Claim 1 or 2, **characterised in that** from two to ten cutting elements (26, 36, 46, 56, 66) are provided in the section of the thread (21) the height of which decreases constantly towards the free end (15) of the shaft (12).

4. Thread-cutting screw according to any one of Claims 1 to 3, **characterised in that**, in the axial projection of the shaft (12), the cutting elements (26, 36, 46, 56, 66) are arranged offset from one another in each case by from 60° to 120°.

## Revendications

1. Vis autotaraudeuse (11) comportant une tige (12) ayant, en partant de son extrémité libre (15), un filetage (21) qui s'étend sur au moins une partie de sa longueur, lequel filetage comporte des corps tranchants (26, 36, 46, 56, 66) constitués d'un matériau dont la dureté est supérieure à la dureté du filetage (21), agencés au moins en partie dans des évidements ouverts radialement vers l'extérieur (24), le profil extérieur radial (27 ; 37 ; 47 ; 57 ; 67) des corps tranchants (26, 36, 46, 56, 66) faisant saillie, au moins en partie, à partir du filetage (21), **caractérisée en ce que**
le filetage (21) comporte une partie dans laquelle la hauteur du filetage (21) jusqu'au côté extérieur de tige (14) diminue de manière constante jusqu'à l'extrémité libre (15) de la tige (12) et la hauteur (A ; B ; C ; D ; E) du profil extérieur radial (27 ; 37 ; 47 ; 57 ; 67) des corps tranchants (26, 36, 46, 56, 66) jusqu'au côté extérieur de tige (14) diminue de manière progressive jusqu'à l'extrémité libre (15) de la tige (12).

2. Vis autotaraudeuse selon la revendication 1, **caractérisée en ce que** la hauteur (A ; B ; C ; D ; E) du profil extérieur radial (27 ; 37 ; 47 ; 57 ; 67) jusqu'au côté extérieur de tige (14) augmente de manière uniforme du corps tranchant (26, 36, 46, 56, 66) jusqu'au corps tranchant (26, 36, 46, 56).

3. Vis autotaraudeuse selon la revendication 1 ou 2, **caractérisée en ce que** deux à dix corps tranchants (26 ; 36 ; 46 ; 56 ; 66) sont prévus dans la partie du filetage (21) dont la hauteur diminue de manière constante jusqu'à l'extrémité libre (15) de la tige (12).

4. Vis autotaraudeuse selon l'une quelconque des revendications 1 à 3, **caractérisée en ce que** les corps tranchants (26 ; 36 ; 46 ; 56 ; 66) sont agencés
décalés de 60 à 120 ° les uns par rapport aux autres dans une projection axiale de la tige (12).
